# EUROPEAN PATENT SPECIFICATION

(11) **EP 1 008 888 B1**
(45) Date of publication and mention of the grant of the patent: **25.09.2002**
(21) Application number: 99660187.8
(22) Date of filing: 03.12.1999
(51) Int. Cl.: G02C 5/00

(54) **Foldable spectacles**
Faltbrille
Lunettes pliables

(30) Priority: 11.12.1998 FI 980555 U
(43) Date of publication of application: 14.06.2000
(73) Proprietor: Oy KH-Karixmatic Ltd, 02200 Espoo (FI)
(72) Inventor: Peltomäki, Jouko, 01150 Söderkulla (FI)
(74) Representative: Lipsanen, Jari Seppo Einari

(56) References cited:
- EP-A- 0 311 379
- WO-A-95/10064
- GB-A- 458 990
- GB-A- 1 372 417
- US-A- 2 166 110
- US-A- 2 307 419
- US-A- 3 049 974
- US-A- 4 681 410

## Description

The present invention relates to spectacles according to the preamble to Claim 1.

Collapsible spectacles are used to allow users to carry the spectacles with them easily and unobtrusively, so that the spectacles will be more ready available when needed. A collapsible spectacle construction is particularly suitable for manufacturing reading glasses and spectacles designed for temporary use.

Patent publication GB 1 372 417 discloses collapsible spectacles, with arms that can be turned to a storage position that protects the lenses. The spectacles disclosed in the publication include a frame component, which has openings on each side of the spectacles. One lens is fitted into each opening, the openings being closed by means of end pieces on the left and right-hand sides as seen from the direction of the user of the spectacles. The left-hand arm of the spectacles is hinged to the extreme rear of the left-hand end piece. The right-hand arm of the spectacles is, however, hinged to a connecting component, which is in turn jointed to the right-hand end piece. The joint between the connecting component and the right-hand end piece is such that the connecting component can be rotated perpendicularly around the hinge against the width of the frame component. This construction allows the spectacles to be folded into a storage position, in which the left-hand arm folds over and protects the rear surface of the spectacles while the right-hand arm turns over the front of the lenses, then folds down to protect the front surface of the lenses.

Application publication WO 95/10064 in turn discloses spectacles with conventional thin arms and a thin front component. The arms are joined to the front component of the spectacles by means of intermediate pieces, which are attached to the front component in such a way that they can rotate, the arms being hinged perpendicularly to the intermediate pieces. The relative dimensions are specified so that one of the arms can be turned to a storage position along the upper edge of the lens component and the other along the lower edge, so that the arms take up relatively little space. However, if it is wished to protect the lenses, the spectacles must be placed in a spectacle case, which increases the space needed considerably.

The invention is intended to create an entirely new construction for collapsible spectacles, which is simpler than the known constructions.

The invention is based on replacing the lenses of the spectacles with a unified lens component. Thus, a frame is not necessarily required, as the lens component can be made to be self-supporting. The necessary hinge and/or joint counter-pieces can also be formed in the lens component, making the construction even simpler. The invention also permits the arms to be shaped so that they form a unified protective case around the lens component in the storage position. For example, this allows the arms' long sides that face each another to be made concave and shaped so that, when the concave sides are pressed against each other, edges running round the concave part of the arms engage each other and, together with the long sides of the arms, enclose the lens component of the spectacles in a storage space.

The spectacles according to the invention are defined in Claim 1.

Considerable advantages are gained with the aid of the invention.

The construction according to the invention is simpler, making the spectacles cheaper to manufacture than corresponding spectacles made according to the state of the art. The simpler construction of spectacles according to the invention allows them to also be made smaller and to take up less space in the storage position.

It is preferable to use small lenses in collapsible spectacles, but the frames around such small lenses easily come in front of the eyes and limit the field of vision. As the invention incorporates a self-supporting lens component, the invention is preferably embodied by not forming a frame around the lenses formed by the lens component. This gives the additional advantage of better viewing properties, without the irritating shadow of the frames.

The invention also permits the arms to be shaped so that, when the spectacles are folded into the storage position, the arms form a unified protective case, with the lens component lying inside. This gives the further advantage that the lens component of the spectacles is entirely surrounded by the case formed by the frames, thus effectively protecting the lens component, even without a separate spectacle case.

All in all, the invention allows the economical manufacture of light and optically high-quality collapsible spectacles of small construction, with the additional advantage that the spectacles can be given a stylish design. For instance, spectacles according to the invention can be designed to a size, together with the storage case formed by the arms, of only about 10 % of that of a normal spectacle case in the storage position. The weight of the spectacles can be, e.g., 10 g.

In the following, the invention is examined with the aid of examples and with reference to the accompanying drawings.

Figure 1 shows one pair of spectacles according to the invention, ready for use, seen at an angle from in front.

Figure 2 shows the spectacles of Figure 1 with the right-hand arm turned to the front.

Figure 3 shows the spectacles of Figure 1 with the arms nearly folded into the storage position.

Figure 4 shows the spectacles of Figure 1 with the arms folded into the storage position.

Figure 5 shows the hinged joint between the arm and the lens component of the spectacles of Figure 1.

Figure 6 shows the hinged joint between the arm and the intermediate piece of the spectacles of Figure 1 and the joint between the intermediate piece and the lens component.

Figure 7 shows the friction lock of the spectacles in Figure 1.

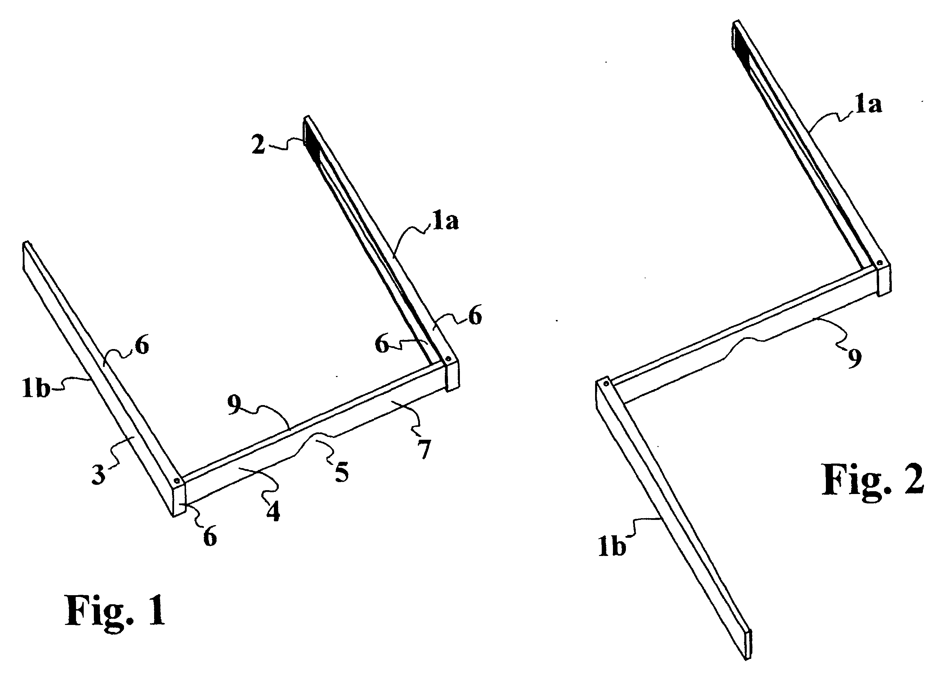

The spectacles shown in Figure 1 include a unified lens component 9, with the left-hand part 7 forming a lens for the left eye of the user of the spectacles and the right-hand part 4 forming a lens for the right eye of the user. The lens component 9 has a recess 5 shaped in centre of its lower edge, to act as a nose support. Figure 1 also shows the left-hand arm 1a, which is joined by its front part to the outer edge of the left-hand part 7 of lens component 9, and the right-hand arm 1b, which is joined by its front part to the outer edge of the right-hand part 4 of lens component 9. In addition, Figure 1 shows friction piece 2, which is fitted to the rear part of left-hand arm 1a. A corresponding friction piece 2 is also fitted to the rear part of right-hand arm 1b. The figure also shows part of the sides 3 of arms 1a and 1b and the edges 6 that run round them.

The lens component 9 can be manufactured by, e.g., injection moulding polycarbonate. The thinnest construction is achieved by making the lenses formed by the lens component 9 aspheric, when the desired strength of lens is created in the centre of the field of vision, with the strength of the lens decreasing towards the edges. In spectacles intended for reading, the lenses formed by lens component 9 are made to magnify, i.e. they are so-called plus lenses, though it is certainly also possible to use reducing, i.e. so-called minus lenses with the invention. In the simplest embodiment, lens component 9 is manufactured with left and right-hand lenses of the same strength. However, if desired, it is also possible to use a lens component 9 forming left and right-hand lenses of different strengths. In the preferred embodiment illustrated in Figure 1, the lens component is injection-moulded from polycarbonate to form a lens component 9 with two aspheric plus lenses of the same strength.

Arms 1a and 1b can also be manufactured from a suitable plastic by injection moulding. Arms 1a and 1b are preferably manufactured so that arm 1a, 1b comprises an elongated side 3 of arm 1a, 1b and an edge 6 running round one side of side 3. Side 3 and edge 6 of arms 1a and 1b together form a recess in arm 1a, 1b for lens component 9. In the preferred embodiment, the left-hand arm 1a and the right-hand arm 1b of the spectacles are mutually identical. Because it is intended that arms 1a, 1b can form a protective case for lens component 9, the edges of arms 1a and 1b must be shaped to fit each other when pressed together. When using mutually identical arms 1a and 1b, side 3 of the arm will be symmetrical around its centre, in the form, for example, of a rectangle or a rounded rectangle. Because the arms lie in the storage position in such a way that the front part of edge 6 of left-hand arm 1a presses against the rear part of edge 6 of right-hand arm 1b, and the rear part of edge 6 of left-hand arm 1a presses against the front part of edge 6 of right-hand arm 1b, it is preferable to shape the edges 6 of arms 1a and 1b in such a way that they decrease in height from the front of the arm to the back. The height profile of edge 6 is the same on both sides of arms 1a and 1b in the longitudinal direction of arms 1a and 1b, and preferably has an even slope. In this case, the transverse part of edge 6 of arms 1a and 1b can be considerably lower at the rear end of arms 1a and 1b than the corresponding part at the front end of arms 1a and 1b.

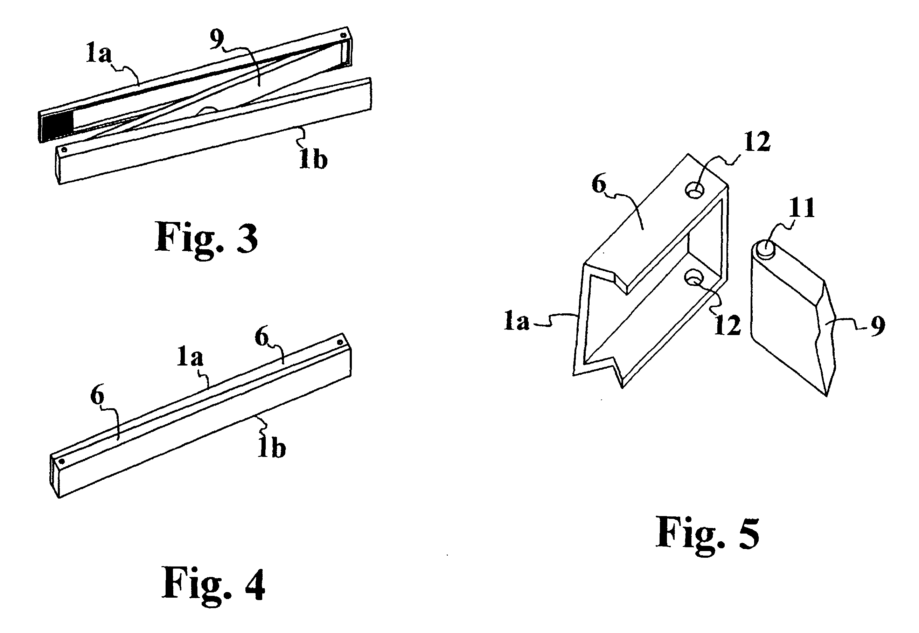

Figures 2 - 4 show how the spectacles are folded into the storage position. In the embodiment shown by the figures, the spectacles are implemented in such a way that right-hand arm 1b is connected to lens component 9 by means of both a hinge and a joint, and left-hand arm 1a is connected by only a hinge. The joint connection of right-hand arm 1b permits arm 1b to be rotated around the longitudinal axis of lens component 9. The hinge connections in turn permit arms 1a, 1b to be turned in a plane defined by the longitudinal axes of arms 1a, 1b and lens component 9. The embodiment shown in Figures 2 - 4 is particularly suitable for a right-handed user. If desired, the spectacles can be adapted to particularly suit left-handed users by connecting the left-hand arm 1a to lens component 9 by means of both a hinge and a joint, and right-hand arm 1b by means of a hinge. It is also possible to connect both arms 1a and 1b to lens component 9 by means of a combined hinge and joint. In the embodiment in Figures 2 - 4, however, right-hand arm 1b is fitted to lens component 9 by means of a combined hinge and joint, Figure 2 showing right-hand arm 1b of the spectacles rotated in front of lens component 9. After this rotation stage, the spectacles can be folded together in the manner shown in Figures 3 - 4. Figure 3 also shows how arms 1a and 1b preferably fold to form a protective case for lens component 9. Figure 4 shows one preferable shape for the edges 6 of arms 1a and 1b, which allows the edges 6 to be pressed tightly together in the storage position of the spectacles.

Figure 5 shows one possible construction of the hinged joint between an arm 1a, 1b and the lens component 9. The figure shows the front end of arm 1a and the respective part of edge 6, as well as one end of lens component 9. The figure also shows the hinge pins 11 formed in the end of lens component 9 and the recesses 12 formed for the hinge pins 11 in the inside edge 6 in the front end of arm 1a. Hinge pins 11 can be, e.g., cylindrical, conical, or shaped as a truncated cone, recesses 12 being shaped to fit hinge pins 11 with suitable tightness. Recesses 12 are preferably formed opposite each other in the inner surfaces of edge 6 and need not extend to the outer surface of edge 6 as shown in the figure. On the contrary, the appearance of the spectacles may be improved, if recesses 12 do not extend to the outer surface of edge 6, but remain hidden inside the arms 1 together with hinge pins 11. In the preferred embodiment, arm 1a is made from a material that is flexible enough for the hinge to be assembled by pressing the hinge pins and lens component 9 into place while the edges of arm 1a give way sufficiently. The hinge can also be implemented alternatively by forming the hinge pins 11 in the arms 1a, 1b, and forming the recesses 12 in lens component 9.

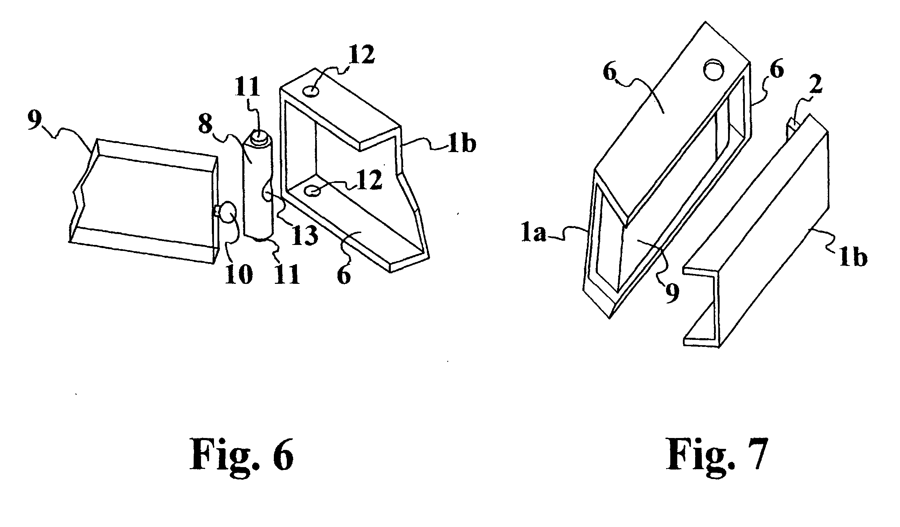

Figure 6 shows one possible construction of the joint between arm 1a, 1b and lens component 9 in greater detail. As in Figure 5, Figure 6 shows the front end of arm 1b and the associated part of edge 6, as well as one end of lens component 9. In addition, the figure shows connecting piece 8, which forms part of the joint construction, and is intended to form a turning hinge joint with arm 1b and a rotating hinge joint with lens component 9. The figures also show the hinge pins 11 formed in the ends of connecting piece 8 and the recesses 12 formed in the front part of arm 1b for hinge pins 11, both of which can be designed as described above in connection with the hinge joints. In addition, the figure shows a protrusion forming a joint ball 10 in the middle of the end of lens component 9, and a hole in connecting piece 8, forming a ball joint cup 13 for ball joint ball 10.

Joint ball 10 is shaped to be essentially symmetrical around an axis of revolution at least substantially parallel to the longitudinal axis of lens component 9. Joint ball 10 is preferably shaped as a sphere. Joint cup 13 is shaped to conform to the shape of joint ball 10 in such a way that joint cup 13 supports joint ball 11, which can rotate inside joint cup 13. In the preferred embodiment, a restriction is formed in the opening forming joint cup 13, allowing joint ball 10 to be pushed past it into joint cup 13, but preventing joint ball 10 from slipping out of joint cup 13 during normal use. In a highly preferred embodiment, lens component 9, arm 1b, and connecting piece 8 have mutual dimensions designed so that, when the spectacles are opened for use, the front edge of the end of lens component 9 engages part of the edge 6 in the end of arm 1b and locks the joint between lens component 9 and arm 1b, preventing its rotation. In this embodiment, when the spectacles are folded into the storage position, arm 1b must first be folded slightly inwards to release the locking between edge 6 and lens component 9, after which arm 1b can be rotated in front of lens component 9.

Figure 7 shows details of a solution allowing the arms 1a, 1b of the spectacles to be locked into the storage position, i.e. to hold shut the protective case formed by arms 1a and 1b around lens component 9. The figure shows the front end of arm 1a and the respective part of edge 6, the rear of the other arm 1b and lens component 9 connected to the front end of arm 1a. In addition, the figure shows the locking tongue of friction piece 2 moulded in the rear end of the other arm 1b, which is arranged to protrude between the lens component 9 and the front part of edge 6 when the spectacles are in the storage position. Correspondingly, at the joint-end, the locking tongue can be arranged to protrude between the front part of edge 6 and the connecting piece 8. Friction piece 2 is preferably manufactured from a flexible material that forms a good friction surface, such as a suitable soft plastic. As well as a locking tongue, friction piece 2 can also provide a friction surface facing the head of the user of the spectacles.

Embodiments of the invention, differing from those disclosed above, can also be envisaged within the scope of the invention as defined in the claims.

For example, the hinge joint between arm 1a, 1b and the lens component can also be implemented differently from the manner disclosed above. One possible hinge solution is a so-called leaf hinge, in which both of the pieces being hinged have several leaf-like protrusions arranged to interlock with protrusions in the other hinge piece. Similarly, the hinge joint can also be implemented by some other suitable technique providing a turning joint.

## Claims

1. Collapsible spectacles, which comprise
- a front component (4, 5, 7) of the spectacles, in which there are two light-refracting lenses,
- connecting members arranged at both ends of the front component (4, 5, 7), including counter-pieces (10, 11) of the connecting members on the side of the front component (4, 5, 7), and
- arms (1a, 1b) arranged, by means of the connecting members, to fold at both ends of the front component (4, 5, 7) of the spectacles, and which are essentially the same width and essentially the same length as the front component (4, 5, 7) of the spectacles, and which are foldable to protect the front and rear surfaces of the front component (4, 5, 7) of the spectacles,
wherein
- the first connecting members are combined hinge and joint members, in order to create a joint that folds in at least one direction and rotates in at least one other direction, thus permitting the respective arm to be rotated around the longitudinal axis of the front component (4, 5, 7), and
- the second connecting members are either corresponding combined hinge and joint members, or hinge members that form a folding joint in one direction and permits the respective arm to be turned in a plane defined by the longitudinal axes of the arm and the front component (4, 5, 7),
**characterized in that**
- both lenses of the spectacles are formed as one single self-supporting lens component (9), thereby forming the front component (4, 5, 7)
- the counter-pieces (10, 11) of the connecting members on the side of the front component (4, 5, 7) of the spectacles and the lens component (9) are formed as one piece,
- both arms (la, 1b) comprise an elongated, flat side component (3), and a flanged edge (6) running round one side of the side component (3), which, together with the side component (3), forms a recess inside the arm (1a, 1b) for the lens component (9), such that the arms (1a, 1b) form, in the spectacle storage position, an essentially enclosed protective case around the lens component (9).

2. Spectacles according to Claim 1, **characterized in that** the combined hinge and joint members comprise
- a shaped protrusion in the side of the lens component (9), forming a joint ball (10),
- a connecting piece (8), in which first hinge components (11) are formed for the hinge joint and a joint cup (13), adapted to fit around the joint ball, is formed for attaching the connecting piece to the lens component (9) in a manner allowing rotation, and
- second hinge components (12) formed in the arms (1a, 1b), to connect the arms (1a, 1b) to the connecting piece (8), by means of the hinge joint formed between the first and second hinge components (11, 12).

3. Spectacles according to Claim 1 or 2, **characterized in that** the hinge members comprise hinge pins (11) formed in the first hinged piece, such as the lens component (9), and recesses (12) formed for the hinge pins (11) in the second hinged piece, such as the arm (1a, 1b).

4. Spectacles according to any of Claims 1 - 3, **characterized in that** the left-hand arm (1a) and the right-hand arm (1b) are mutually identical.

## Patentansprüche

1. Zusammenklappbare Brille, umfassend
- eine vordere Komponente (4, 5, 7) der Brille, in der zwei lichtbrechende Gläser angeordnet sind,
- Verbindungsteile, welche an beiden Enden der vorderen Komponente (4, 5, 7) angeordnet sind, inklusive Gegenstücke (10, 11) der Verbindungsteile auf der Seite der vorderen Komponente (4, 5, 7) und
- Bügel (1a, 1b), welche mittels der Verbindungsteile so angeordnet sind, um an beiden Enden der vorderen Komponente (4, 5, 7) der Brille zusammenzuklappen, und welche im Wesentlichen von gleicher Breite und im Wesentlichen von gleicher Länge wie die vordere Komponente (4, 5, 7) der Brille sind und welche klappbar sind, um die vordere und hintere Oberfläche der vorderen Komponente (4, 5, 7) der Brille zu schützen,
wobei
- die ersten Verbindungsteile kombinierte Gelenk- und Verbindungsstückteile sind, um eine Verbindung zu schaffen, welche in wenigstens eine Richtung zusammenklappt und in wenigstens eine andere Richtung rotiert und es somit erlaubt, den jeweiligen Bügel um die Längsachse der vorderen Komponente (4, 5, 7) zu drehen, und
- die zweiten Verbindungsteile entweder korrespondierende kombinierte Gelenk- und Verbindungsstückteile sind, oder Gelenkteile, die eine Klappverbindung in eine Richtung bilden und es erlauben, den jeweiligen Bügel in einer durch die Längsachsen des Bügels und der vorderen Komponente (4, 5, 7) gebildeten Ebene zu bewegen,
**dadurch gekennzeichnet, dass**
- beide Gläser der Brille als eine einzige selbsttragende Glaskomponente (9) geformt sind und somit die vordere Komponente (4, 5, 7) bilden,
- die Gegenstücke (10, 11) der Verbindungsteile an der Seite der vorderen Komponente (4, 5, 7) der Brille und die Glaskomponente (9) als ein Teil geformt sind,
- beide Bügel (1a, 1b) eine längliche, flache Seitenkomponente (3) und einen vorgezogenen Rand (6), welcher um eine Seite der Seitenkomponente (3) läuft, umfassen, welcher Rand, zusammen mit der Seitenkomponente (3) eine Nische in dem Bügel (1a, 1b) für die Glaskomponente (9) bildet, so dass die Bügel (1a 1b) in der Brillenverwahrposition eine im Wesentlichen geschlossene Schutzhülle um die Glaskomponente (9) bilden.

2. Brille nach Anspruch 1,
**dadurch gekennzeichnet, dass** die kombinierten Gelenk- und Verbindungsstückteile folgende Merkmale umfassen:
- einen geformten Vorsprung in der Seite der Glaskomponente (9), welcher ein Kugelgelenk (10) bildet,
- ein Verbindungsstück (8), in welchem erste Gelenkkomponenten (11) für die Gelenkverbindung ausgeformt sind und eine Pfanne (13) zur Aufnahme des Kugelgelenks, welches zur Befestigung des Verbindungsstücks an der Glaskomponente (9) in einer Rotation erlaubenden Weise ausgebildet ist, und
- zweite, in den Bügeln (1a, 1b) gebildete Gelenkkomponenten (12), um die Bügel (1a, 1b) mit dem Verbindungsstück (8) mittels der zwischen den ersten und zweiten Gelenkkomponenten (11, 12) gebildeten Gelenkverbindung zu verbinden.

3. Brille nach Anspruch 1 oder 2,
**dadurch gekennzeichnet, dass** die Gelenkteile Gelenkstifte (11) umfassen, welche in das erste Gelenkteil, wie zum Beispiel die Glaskomponente (9), eingearbeitet sind, und Aussparungen (12), welche für die Gelenkstifte (11) in dem zweiten Gelenkteil, wie zum Beispiel die Bügel (1a, 1b) eingearbeitet sind.

4. Brille nach einem der Ansprüche 1 bis 3,
**dadurch gekennzeichnet, dass** der linke Bügel (1a) und der rechte Bügel (1b) einander identisch sind,

## Revendications

1. Lunettes pliables, qui comprennent :
un composant avant (4, 5, 7) des lunettes, dans lequel il y a deux lentilles de réfraction de la lumière,
des éléments de connexion agencés aux deux extrémités du composant avant (4, 5, 7), incluant des pièces complémentaires (10, 11) des éléments de connexion sur le côté du composant avant (4, 5, 7), et
des branches (1a, 1b) disposées, au moyen des éléments de connexion, de façon à se plier aux deux extrémités du composant avant (3, 4, 7) des lunettes, et qui ont sensiblement la même largeur et sensiblement la même longueur que le composant avant (4, 5, 7) des lunettes et qui sont pliables pour protéger les surfaces avant et arrière du composant avant (4, 5, 7) des lunettes,
dans lesquelles
les premiers éléments de connexion sont des éléments combinés de charnière et de rotule, afin de créer une articulation qui se plie dans au moins une direction et qui tourne dans au moins une autre direction, ce qui permet de faire pivoter la branche respective autour de l'axe longitudinal du composant avant (4,5,7) et
les deuxièmes éléments de connexion sont des éléments combinés correspondants de charnière et de rotule, ou des éléments de charnière qui forment une articulation de pliage dans une direction qui permet à la branche respective de pivoter dans un plan défini par les axes longitudinaux de la branche et du composant avant (4, 5, 7),
**caractérisées en ce que**
les deux verres des lunettes sont sous la forme d'un composant de vision auto-porteur unitaire (9), de façon à constituer le composant avant (4, 5, 7),
les pièces complémentaires (10, 11) des éléments de connexion, sur le côté du composant avant (4, 5, 7) des lunettes, et le composant de vision (9) sont formés en une seule pièce.
les deux branches (1a, 1b) comprennent un composant latéral allongé plat (3) et un rebord (6) s'étendant autour d'un côté du composant latéral (3) de façon à définir, en association avec le composant latéral (3), un évidement à l'intérieur de la branche (1a, 1b) pour recevoir le composant de vision (9) d'une manière telle que les branches (1a, 1b) définissent, dans la position de rangement des lunettes, un étui protecteur sensiblement fermé autour du composant de vision (9).

2. Lunettes selon la revendication 1, **caractérisées en ce que** les éléments combinés de charnière et de rotule comprennent :
une saillie profilée dans le côté du composant de vision (9). pour former une rotule (10),
une pièce de connexion (8) dans laquelle des premiers composants de charnière (11) sont formés pour l'articulation à charnière, et une cuvette d'articulation (13), prévus pour s'ajuster autour de la rotule, est formée pour attacher la pièce de connexion au composant de vision (9) d'une manière permettant une rotation, et
des deuxièmes composants de charnière (12) formés dans les branches (1a, 1b) pour connecter les branches (1a, 1b) à la pièce de connexion (8) au moyen de l'articulation à charnière formée entre les premiers et deuxièmes composants de charnière (11, 12).

3. Lunettes selon la revendication 1 ou 2, **caractérisées en ce que** les éléments de charnière comprennent des axes de charnière (11) formés dans la première pièce articulée, telle que le composant de vision (9), et des logements (12) formés pour recevoir les axes de charnière (11) dans la deuxième pièce articulée, telle que la branche (1a, 1b).

4. Lunettes selon une quelconque des revendications 1 à 3, **caractérisées en ce que** la branche gauche (1a) et la branche droite (1b) sont mutuellement identiques.
